Europäisches Patentamt

European Patent Office

Office européen des brevets

(19)

(11) **EP 1 691 319 A1**

(12) **DEMANDE DE BREVET EUROPEEN**

(43) Date de publication:
**16.08.2006 Bulletin 2006/33**

(51) Int Cl.:
*G06K 9/62* (2006.01)    *G06F 17/30* (2006.01)

(21) Numéro de dépôt: **06101548.3**

(22) Date de dépôt: **10.02.2006**

(84) Etats contractants désignés:
**AT BE BG CH CY CZ DE DK EE ES FI FR GB GR HU IE IS IT LI LT LU LV MC NL PL PT RO SE SI SK TR**
Etats d'extension désignés:
**AL BA HR MK YU**

(30) Priorité: **14.02.2005  FR 0501487**

(71) Demandeur: **FRANCE TELECOM
75015 Paris (FR)**

(72) Inventeur: **Meyer, Franck
Rond Point de Saint Elivet
22300 Lannion (FR)**

(74) Mandataire: **Guéné, Patrick Lucien Juan Joseph
Cabinet Vidon
Technopole Atalante
16B, rue de Jouanet
BP 90333
F-35703 Rennes Cedex 7 (FR)**

(54) **Procédé et dispositif de génération d'un arbre de classification permettant d'unifier les approches supervisées et non supervisées, produit programme d'ordinateur et moyen de stockage correspondants**

(57)    L'invention concerne un procédé de génération d'un arbre de classification (7) en fonction d'un modèle de classification et à partir d'un ensemble de données à classer (1) décrites par un ensemble d'attributs. Selon l'invention, le procédé comprend une étape d'obtention du modèle de classification, comprenant elle-même une étape (53) de définition d'un mode d'utilisation pour chaque attribut consistant à préciser quelle(s) propriété(s) possède l'attribut parmi les au moins deux propriétés suivantes, non exclusives l'une de l'autre : un attribut est marqué cible s'il est à exliquer ; un attribut est marqué tabou s'il ne doit pas être utilisé comme attribut explicatif, un attribut non marqué tabou étant un attribut explicatif. En outre, le modèle de classification appartient au groupe comprenant : des modèles de classification supervisés à un attribut cible, dans chacun desquels un unique attribut est marqué cible et tabou, les attributs non marqués cible n'étant pas marqués tabou ; des modèles de classification supervisés à plusieurs attributs cibles, dans chacun desquels au moins deux attributs, mais pas tous les attributs, sont marqués cible et tabou, les attributs non marqués cible n'étant pas marqués tabou ; et des modèles de classification non supervisés, dans chacun desquels tous les attributs sont marqués cible, et au moins un attribut n'est pas marqué tabou.

Fig. 5

**Description**

**1. Domaine de l'invention**

L'invention se situe dans le domaine des Logiciels de Fouille de Données (« Data Mining » en anglais) et des Procédés de Statistiques. Le domaine connexe est celui des Systèmes de Gestion de Bases de Données par exemple des bases de données documentaires.

L'invention permet de détecter des relations statistiques complexes et de faire de la prédiction statistique.

L'invention concerne un procédé de Classification Automatique qui permet de générer un Arbre de Décision Multicritères, expliquant une ou plusieurs variables (aussi appelés attributs) cibles de nature différentes, à partir d'une sources de données (c'est-à-dire un ensemble de données à classer décrites par un ensemble d'attributs).

Les Générateurs d'Arbres de Décision (dits Arbres de Décision) sont des systèmes très en vogue d'analyse automatisée de données. Ils permettent d'analyser de grandes quantités de données. Ils permettent de construire un arbre de tests permettant de décrire la façon de déterminer une variable (dite variable cible) en fonction d'un ensemble de variables explicatives.

Dans un Arbre de Décision (aussi appelé arbre de classification), chaque noeud est un test portant sur la valeur d'un attribut des données à classer. Chaque feuille de l'Arbre de Décision indique la valeur de la variable à expliquer, dite variable cible.

Les Arbres de Décision les plus connus sont CART, C4.5, C5 et CHAID.

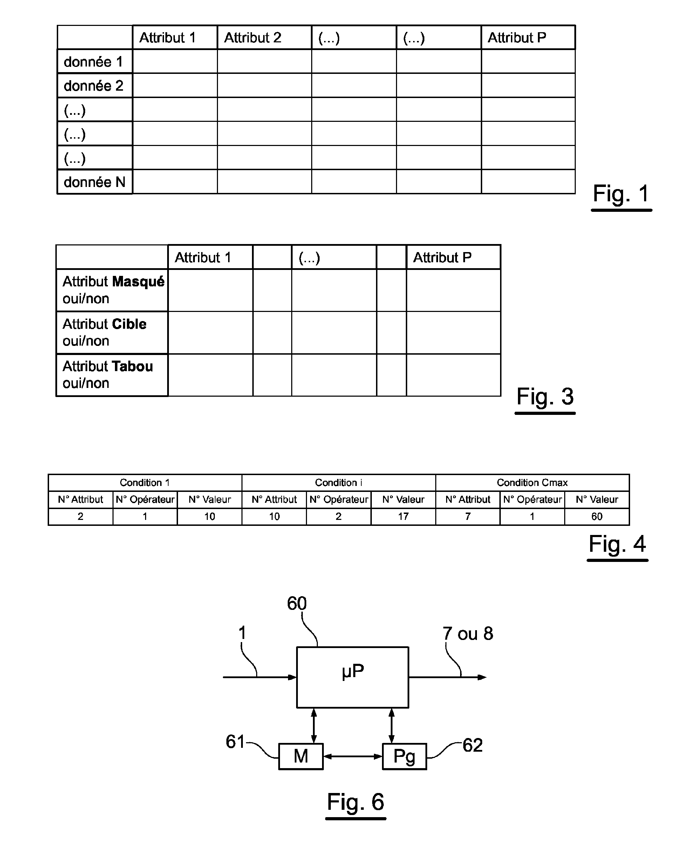

<u>La figure 1</u> montre le principe entendu lorsque l'on parle de données. Les données peuvent par exemple être représentées par les lignes d'un tableau, et les attributs, dits aussi variables, ou propriétés sont représentés par les colonnes du tableau.

**2. Art antérieur**

2.1 Techniques connues de l'art antérieur

Une première technique connue est le système d'Arbre de Décision CART (voir le document : Breiman L, Friedman J.H., Olshen R.A. and Stone CJ, "Classification and Regression Trees", Chapman et Hall, 1984). Ce procédé de classification de données, très connu en « Data Mining », permet de générer un arbre de décision en fonction d'une variable cible et une seule. Il s'agit d'un procédé supervisé à une variable cible. Les attributs des données traitées peuvent être continus ou discrets. La variable cible peut être continue ou discrète.

Une seconde technique connue est le système de classification non supervisé DIVOP (voir le document : Chavent M, "A monothetic clustering method", Pattern Recognition Letters 19, p. 989-996, 1998). Ce procédé de classification non supervisé permet de générer un arbre de décision sans variable cible, pour des variables continues uniquement. Il propose une alternative au procédé de classification non supervisé très connu dit "Classification Hiérarchique Ascendante" en générant un arbre de décision à la place d'un dendogramme (un dendogramme est un arbre binaire de regroupement ascendant, n'utilisant pas de noeuds de tests). Ce système ne fonctionne que pour des variables continues. Il ne permet pas de gérer une variable cible.

2.2 Inconvénients des techniques connues de l'art antérieur

Avec la première technique connue (technique CART), on ne peut pas réaliser de classification non supervisée, sans variable cible. En effet, la technique CART a besoin d'une (et une seule) variable cible pour générer un arbre de décision. Elle ne peut donc pas être utilisé pour de la classification non supervisée (dite aussi « clustering » en anglais). De plus, elle ne peut pas générer un arbre de décision en prenant en compte plusieurs variables cibles.

L'inconvénient de la seconde technique antérieure (technique DIVOP) est qu'elle est limitée à des données intégralement continues, et à de la classification non supervisée. La méthode DIVOP ne peut donc pas être utilisée pour de la classification supervisée pour expliquer une variable cible. Elle ne peut pas être utilisée sur des données comportant des attributs discrets (à valeurs qualitatives), qui sont cependant très nombreuses dans les cas réels.

De plus, les deux techniques connues (CART et DIVOP), ne permettent pas de générer un Arbre de Décision à base de règles Multivariées, c'est-à-dire utilisant plusieurs attributs explicatifs à la fois dans les noeuds de test. D'autres méthodes le permettent toutefois, mais dans le cadre restreint de l'analyse supervisée pour attributs explicatifs numériques et principalement par des régressions linéaires.

Par ailleurs, le travail de modélisation du statisticien ou de l'analyste de données consiste toujours à générer à l'aide d'outils statistiques : soit un modèle non supervisé (cas de la technique DIVOP), pour une analyse exploratoire par exemple, soit un modèle supervisé (cas de la technique CART), pour une unique variable cible. Suivant qu'il veut effectuer l'une ou l'autre de ces tâches, le statisticien ou l'analyste de données ne dispose pas d'un unique type d'outil mais doit utiliser un type d'outil ou un autre. De plus, si plusieurs variables cibles sont à étudier, il faut généralement faire plusieurs modèles supervisés, chacun dédiés à la modélisation d'une des variables. Cela est particulièrement vrai pour les modèles effectués à l'aide d'Arbres de Décision.

## 3. Objectifs de l'invention

L'invention a notamment pour objectif de pallier ces différents inconvénients de l'état de la technique.
Plus précisément, l'un des objectifs de la présente invention, dans au moins un mode de réalisation, est de fournir une technique permettant d'unifier les approches supervisées et non supervisées dans un même système, afin qu'il soit possible d'utiliser le même outil de génération d'un Arbre de Décision pour faire :

- soit de la classification non supervisée (modèle exploratoire),
- soit de la classification supervisée à une variable cible (modèle explicatif simple),
- soit de la classification supervisée avec plusieurs variables cibles (modèle explicatif multicritères).

Une telle unification des approches supervisées et non supervisées vise à obtenir des gains de différentes natures :

- fonctionnalité : il devient possible, avec un arbre de décision, d'effectuer des analyses multicritères portant sur plusieurs variables cibles à la fois. Par exemple, on peut chercher un modèle qui explique à la fois le montant de la facture et à la fois la durée de fidélité d'un client pour une entreprise, en fonction d'autres paramètres ;
- productivité : un seul outil multifonction pour l'analyste de données : il n'est plus nécessaire d'avoir un procédé pour effectuer une analyse supervisée, et d'avoir un autre procédé pour effectuer une analyse non supervisée ;
- simplification du déploiement des modèles dans un Système d'Information par exemple, qui découle de homogénéité de traitement.

L'invention a également pour objectif, dans au moins un mode de réalisation, de fournir une telle technique permettant de générer des arbres de décision avec des tests multivariés, c'est-à-dire des tests portant sur un nombre d'attributs non limité à un (comme c'est en général le cas dans les arbres de décision type CART, C5, etc).
Un autre objectif de l'invention, dans au moins un mode de réalisation, est de fournir une telle technique qui soit simple à mettre en oeuvre et peu coûteuse.

## 4. Résumé de l'invention

Ces différents objectifs, ainsi que d'autres qui apparaîtront par la suite, sont atteints selon l'invention à l'aide d'un procédé de génération d'un arbre de classification en fonction d'un modèle de classification et à partir d'un ensemble de données à classer décrites par un ensemble d'attributs. Selon l'invention, le procédé comprend une étape d'obtention dudit modèle de classification, comprenant elle-même une étape de définition d'un mode d'utilisation pour chaque attribut consistant à préciser quelle(s) propriété(s) possède ledit attribut parmi les au moins deux propriétés suivantes, non exclusives l'une de l'autre :

- un attribut est marqué cible s'il est à expliquer ;
- un attribut est marqué tabou s'il ne doit pas être utilisé comme attribut explicatif, un attribut non marqué tabou étant un attribut explicatif.

En outre, ledit modèle de classification appartient au groupe comprenant :

- des modèles de classification supervisés à un attribut cible, dans chacun desquels un unique attribut est marqué cible et tabou, les attributs non marqués cible n'étant pas marqués tabou ;
- des modèles de classification supervisés à plusieurs attributs cibles, dans chacun desquels au moins deux attributs, mais pas tous les attributs, sont marqués cible et tabou, les attributs non marqués cible n'étant pas marqués tabou ; et
- des modèles de classification non supervisés, dans chacun desquels tous les attributs sont marqués cible, et au moins un attribut n'est pas marqué tabou.

Il est important de rappeler que les méthodes d'analyses supervisées classiques n'utilisent que les propriétés suivantes pour définir le mode d'utilisation des variables (ou attributs) dans un modèle :

- variable masquée en entrée : oui/non (dite aussi variable en entrée : oui/non) ;

- variable cible : oui/non.

Les variables masquées en entrées sont simplement masquées durant le traitement. Tout se passe comme si on travaillait avec des données où les colonnes de ces variables avaient été supprimées. Nous de détaillerons donc pas plus ici ce principe des variables masquées. Les variables masquées ne doivent pas être confondues avec les variables marquées tabou.

Ce qu'il est important en revanche de noter dans les techniques connues, c'est mode de gestion des variables cibles. Par défaut, dans les arbres de décision classiques, c'est toujours la variable cible qui a la propriété implicite de ne pas pouvoir être exprimée dans le modèle généré, sous la forme d'une variable sur laquelle porterait un test. En effet, il n'y aurait aucun intérêt à produire un arbre de décision dans laquelle la variable cible est expliquée par elle-même.

Le principe général de l'invention consiste précisément à introduire de façon explicite une nouvelle propriété (« tabou »), non exclusive de la propriété « cible » déjà connue, pour défmir le mode d'utilisation de chaque attribut.

Cette approche tout à fait nouvelle et inventive permet d'unifier les approches supervisées et non supervisées dans un même système, c'est-à-dire de définir différents modèles de classification (classification non supervisée, classification supervisée à une variable cible et classification supervisée avec plusieurs variables cibles) pouvant tous être utilisés par un même procédé de génération d'un arbre de classification (aussi appelé arbre de décision). L'invention concerne donc une extension des méthodes supervisées à une seule variable cible (cas de la technique CART) pour pouvoir travailler avec plusieurs variables cibles à la fois, ou avec aucune variable cible.

Plus précisément, l'invention permet de gérer :

- le cas de la classification supervisée à une seule variable cible, en marquant cette variable à la fois comme cible et tabou. Comme indiqué ci-dessus, la propriété « tabou » est implicite dans les techniques connues de type CART ;
- le cas de la classification supervisée à plusieurs variables cibles, en marquant ces dernières à la fois comme cible et tabou. En l'absence d'une propriété « tabou » explicite dans les techniques connues (notamment CART), il n'était pas possible d'obtenir un modèle de classification supervisée à plusieurs variables cibles ;
- le cas où une variable est cible mais peut aussi être explicative (dans ce cas, elle est marquée cible et non tabou). Ceci a notamment un sens quand toutes les variables sont cibles, car c'est selon ce principe que l'on peut réaliser une classification non supervisée par Arbre de Décision. Cela permet par ailleurs, même lorsque l'on veut un modèle non supervisé, de marquer certains variables comme tabou (c'est-à-dire non explicatives) tout en étant prises en compte dans le modèle (puisqu'elles sont marquées cible).

De façon avantageuse, parmi les modèles de classification non supervisés, on distingue :

- ceux dans chacun desquels tous les attributs sont marqués cible, et aucun attribut n'est marqué tabou ; et
- ceux dans chacun desquels tous les attributs sont marqués cible, et au moins un attribut, mais pas tous les attributs, est marqué tabou.

Avantageusement, la défmition du mode d'utilisation pour chaque attribut tient compte également de la propriété suivante, non exclusive des deux autres propriétés : un attribut est marqué masqué s'il ne doit pas être pris en compte pour définir ledit modèle de classification.

En d'autres termes, la présente invention est compatible avec la notion (connue en elle-même) d'attribut masqué.

De façon classique, ledit arbre de décision comprend au moins un noeud permettant de défmir une partition sur un sous-ensemble de données reçu par ledit noeud, chaque noeud étant un ensemble de règles de partitionnement comprenant au moins une règle définie par au moins une condition sur au moins un des attributs. Selon une caractéristique préférentielle de l'invention, pour générer l'ensemble de règles de chaque noeud, le procédé comprend les étapes suivantes, effectuées de manière itérative tant qu'au moins un critère de fin d'exploration n'est pas vérifié :

a) obtention d'un nouvel ensemble de règles permettant de définir une nouvelle partition sur le sous-ensemble de données reçu par le noeud, la ou les conditions qui défmissent chaque règle portant uniquement sur un ou plusieurs attributs non marqués tabou ;

b) première évaluation de la qualité de la nouvelle partition, par obtention d'une nouvelle valeur d'un premier indicateur calculé avec l'ensemble de données, seuls les attributs marqués cible influant sur ledit premier indicateur ;

c) si la qualité de la nouvelle partition, évaluée avec le premier critère, est supérieure à celle des partitions évaluées lors des itérations précédentes, également avec le premier critère, la nouvelle valeur du premier indicateur est stockée et devient une valeur optimale courante, et le nouvel ensemble de règles est stocké et devient un ensemble de règles optimal courant,

de sorte qu'au final, l'ensemble de règles dudit noeud est l'ensemble de règles optimal courant au moment où un critère de fin d'exploration est vérifié.

Il est à noter que l'invention permet de générer un arbres de décision avec au moins un test multivarié, dans le cas où cette au moins une règle est un test basé sur au moins deux attributs non marqués tabou.

De façon préférentielle, l'obtention d'une nouvelle valeur de l'indicateur, pour une nouvelle partition, comprend les étapes suivantes :

- on affecte un poids égal à un à chacun des attributs d'origine marqués cible, et un poids égal à zéro à chacun des attributs d'origine non marqués cible ;
- on recode l'ensemble des attributs d'origine en un ensemble d'attributs recodés $Z_1...Z_Q$ tel que:

  * si ledit d'origine $A_j$ est de type discret et possède N modalités différentes, il est recodé, selon un recodage disjonctif complet, en N attributs recodés $Z_{d(j)} ... Z_{f(j)}$ ayant [0 ;1] comme domaine de valeur, avec N = f(j)-d(j) +1, chacun des N attributs recodés se voyant attribuer un poids identique à celui de l'attribut d'origine dont ils sont issus ;
  * si ledit d'origine $A_j$ est de type continu, il est recodé en un attribut recodé en normalisant à [0 ;1] son domaine de valeur, ledit attribut recodé se voyant attribuer un poids identique à celui de l'attribut d'origine dont il est issu ;

- on recode la nouvelle partition dans l'espace des attributs recodés ;
- on calcule l'inertie Intra-Classe de la nouvelle partition recodée dans l'espace des attributs recodés.

Le passage dans l'espace des attributs recodés permet de calculer l'inertie Intra-Classe quel que soit le type (discret ou continu) de chacun des attributs marqués cible qui influent sur cet indicateur.

De façon avantageuse, l'inertie Intra-Classe est défmie par :

$$Intra(P) = \sum_{j=1}^{K} \left( \sum_{x_i \in C_j} p_i d^2(x_i, g_k) \right)$$

où P est une partition de n points, composée de K sous-ensembles $C_1 ... C_K$,
d(.) est une fonction de distance entre deux points,
$p_i$ est le poids du point numéro i, la somme des poids $p_i$ valant un, et
$g_k$ est le centre de gravité de l'ensemble des points appartenant au sous-ensemble $C_k$,
et la fonction de distance d(.), pour les données recodées dans l'espace des attributs recodés $Z_1...Z_Q$ est définie par :

$$d(d_a, d_b) = \sqrt{\sum_{j=1}^{Q} \left( Dis\tan ceZ_j\left(Z_{ja}, Z_{jb}\right) poidsZ(j) \right)^2}$$

où $d_a(Z_{1a}, Z_2,... Z_{Qa})$ et $d_b(Z_{1b}, Z_{2b},... Z_{Qb})$ sont deux données recodées dans l'espace des attributs recodés $Z_1 ... Z_Q$, et :

DistanceZ$_j(x_j, y_j) = |x_j-y_j|$ si $Z_j$ est un attribut recodé issu d'un attribut de type continu,
Distance $Z_j(x_j, y_j) = |x_j-y_j|/2$ si $Z_j$ est un attribut recodé issu d'un recodage disjonctif complet d'un attribut discret.

Avantageusement, l'étape d'obtention d'un nouvel ensemble de règles, permettant de définir une nouvelle partition, est effectuée selon un mode de génération stochastique des partitions.

Les modes de génération stochastique présentent l'avantage d'être moins coûteux que les modes de génération exhaustif. Il est clair cependant que l'invention couvre également le cas où ces modes de génération exhaustif sont utilisés.

De façon avantageuse, le mode de génération stochastique des partitions est basé sur une méta heuristique d'optimisation combinatoire de type "Recherche locale à voisinage variable" (ou VNS, pour "Variable Neighborhood Search" en anglais).

Selon une variante avantageuse, l'étape c) est remplacée par l'étape suivante :

c') si la qualité de la nouvelle partition, évaluée avec le premier critère, est supérieure à celle des partitions évaluées lors des itérations précédentes, avec le premier critère :

* on effectue une seconde évaluation de la qualité de la nouvelle partition, par obtention d'une nouvelle valeur d'un second indicateur, de même nature que le premier indicateur mais calculé avec un sous-ensemble de données test ;

* si la qualité de la nouvelle partition, évaluée avec le second critère, est supérieure à celle des partitions évaluées lors des itérations précédentes, avec le second critère, les nouvelles valeurs des premier et second indicateurs sont stockées et deviennent des valeurs optimales courantes, et le nouvel ensemble de règles est stocké et devient un ensemble de règles optimal courant,

* si la qualité de la nouvelle partition, évaluée avec le second critère, est inférieure ou égale à celle des partitions évaluées lors des itérations précédentes, avec le second critère, un compteur est incrémenté et : si le compteur a atteint un seuil déterminé, un critère de fin d'exploration est considéré vérifié, sinon les nouvelles valeurs des premier et second indicateurs sont stockées et deviennent des valeurs optimales courantes, et le nouvel ensemble de règles est stocké et devient un ensemble de règles optimal courant.

L'invention concerne également un produit programme d'ordinateur comprenant des instructions de code de programme pour l'exécution des étapes du procédé selon l'invention précité, lorsque ledit programme est exécuté sur un ordinateur.

L'invention concerne aussi un moyen de stockage, éventuellement totalement ou partiellement amovible, lisible par un ordinateur, stockant un jeu d'instructions exécutables par ledit ordinateur pour mettre en oeuvre le procédé selon l'invention précité.

L'invention concerne encore un dispositif de génération d'un arbre de classification en fonction d'un modèle de classification et à partir d'un ensemble de données à classer décrites par un ensemble d'attributs. Selon l'invention, ce dispositif comprend des moyens d'obtention dudit modèle de classification, comprenant eux-mêmes des moyens de défmition d'un mode d'utilisation pour chaque attribut, permettant de préciser quelle(s) propriété(s) possède ledit attribut parmi les au moins deux propriétés suivantes, non exclusives l'une de l'autre : un attribut est marqué cible s'il est à expliquer ; un attribut est marqué tabou s'il ne doit pas être utilisé comme attribut explicatif, un attribut non marqué tabou étant un attribut explicatif. En outre, ledit modèle de classification appartient au groupe précité, comprenant des modèles de classification supervisés à un attribut cible, dans chacun desquels un unique attribut est marqué cible et tabou, les attributs non marqués cible n'étant pas marqués tabou ; des modèles de classification supervisés à plusieurs attributs cibles, dans chacun desquels au moins deux attributs, mais pas tous les attributs, sont marqués cible et tabou, les attributs non marqués cible n'étant pas marqués tabou ; et des modèles de classification non supervisés, dans chacun desquels tous les attributs sont marqués cible, et au moins un attribut n'est pas marqué tabou.

## 5. Liste des figures

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :

- la figure 1 présente un exemple de type de format de données connu de l'art antérieur et pouvant être traitées par le procédé selon l'invention de génération d'un arbre de décision ;
- la figure 2 est un schéma synoptique d'un mode de réalisation particulier du dispositif selon l'invention de génération d'un arbre de décision et/ou application d'un arbre de décision à des données ;
- la figure 3 est un exemple de table des propriétés des attributs, utilisée par le dispositif selon l'invention de la figure 2 ;
- la figure 4 présente un exemple de numérotation non ambiguë de règles à Cmax conditions, dans le cas d'une exploration exhaustive de l'espace des règles ;
- la figure 5 présente un organigramme d'un mode de réalisation particulier du procédé selon l'invention de génération d'un arbre de décision et/ou application d'un arbre de décision à des données ; et
- la figure 6 présente la structure du dispositif selon l'invention de la figure 2.

## 6. Description détaillée

## 6.1 Schéma général du dispositif

L'invention concerne un dispositif (et un procédé correspondant) de génération d'un arbre de décision et/ou d'application d'un arbre de décision à des données.

L'invention peut par exemple s'appliquer dans le domaine des systèmes de gestion de base de données documentaires.

Dans le mode de réalisation particulier illustré par le schéma synoptique de la **figure 2,** le dispositif selon l'invention 10 reçoit en entrée par exemple un tableau de données 1 issues d'un système de gestion de base de données (SGBD). Ce tableau de données 1 est par exemple du type illustré sur la figure 1, chaque colonne correspondant à un attribut, chaque ligne correspondant à un enregistrement (une donnée).

Dans l'application à une base de données documentaires, une ligne correspond à un document et une colonne correspond à une variable descriptive du document. Une variable descriptive d'un document ou attribut d'un document est par exemple un compte de mots présents dans le document (le nombre d'apparition d'un mot prédéterminé dans le document), la taille du document (le nombre de caractères), sa date de création, sa date de modification, son format d'encodage informatique, le fait qu'il contienne ou non des images, des méta-données (contenant par exemple le nom de l'auteur, la nature du document).

D'autres variables possibles d'un document peuvent être par exemple la classe ou type de publication (roman, poésie, bande dessinée...), la classe de rattachement thématique (par exemple voyage, cuisine, informatique ....).

Le dispositif selon l'invention 10 génère en sortie un modèle explicatif des données sous la forme d'un arbre de décision 7 et/ou des données classées 8 selon un arbre de décision préalablement généré.

Il comprend les modules de programme informatique suivants :

- un module 2 « Gestionnaire du Mode d'Utilisation » (GMU) des attributs, en mode supervisé ou non supervisé ;
- un module 3 « Calculateur d'un Indicateur de Variabilité » (CIV) en fonction des modes spécifiés par le module 2 « Gestionnaire du Mode d'Utilisation », pour une partition d'un sous-ensemble des données, et pour tout ensemble d'attributs continus ou discrets ;
- un module 4 « Générateur de Partitions Candidates » (GPC) en fonction des modes spécifiés par le module 2 « Gestionnaire du Mode d'Utilisation » ;
- un module 5 « Optimiseur Sélectionneur de Partitions » (OSP), à partir de l'indicateur calculé par le module 3 «Calculateur d'un Indicateur de Variabilité », pour des opérations générées par le module 4 « Générateur de Partitions Candidates » ; et
- un module principal 6 (Main), coordonnant les modules précités 2 à 5, les entrées 1/sorties 7, 8, une interface utilisateur (non représentée), l'application récursive du module 5 « Optimiseur Sélectionneur de Partitions », etc.

On présente ci-après successivement chacun des modules 2 à 6.

## 6.2 Le module GMU (Gestionnaire du Mode d'Utilisation des attributs)

Le module 2 « Gestionnaire du Mode d'Utilisation » (GMU) est un module de programme informatique qui permet de gérer les modes (aussi appelés propriétés) Masqué/Cible/Tabou des attributs des données à analyser.

Pour pouvoir traiter les cas demandés par l'utilisateur, le module 2 « Gestionnaire du Mode d'Utilisation » (GMU) gère une table des propriétés des attributs en entrée, par exemple de la forme illustrée sur la **figure 3**. Cette table, appelée table GMU par la suite, mémorise les propriétés de chaque attribut (aussi appelé variable) : masqué ou non masqué, cible ou non cible, tabou ou non tabou (c'est-à-dire non explicatif ou explicatif). Un attribut cible peut être tabou ou non tabou. En pratique, un attribut non cible est aussi marqué non tabou (c'est-à-dire explicatif), afin qu'il n'y ait pas d'attribut non cible et tabou, donc sans intérêt.

Pour les variables masquées, le principe est similaire à l'état de l'art, et n'est donc pas détaillé ici. On rappelle que ce principe revient juste à ignorer totalement l'existence des variables masquées.

Le mode de gestion de la table GMU des propriétés des attributs est le suivant, pour les variables cibles et/ou explicatives (non masquées) :

- Cas 1 : l'utilisateur demande une analyse supervisée classique, avec une seule variable cible $V_i$. Dans ce cas, pour obtenir un modèle de classification supervisé à une seule variable cible, la variable cible $V_i$ est marquée comme telle, et est également marquée comme Tabou. Les autres variables (non marquées cible) ne sont pas marquées tabou (elles sont donc explicatives).
  Dans le domaine documentaire, la variable cible peut être par exemple la classe de rattachement thématique.
- Cas 2 : l'utilisateur demande une analyse supervisée avec plusieurs variables cibles $V_i$, $V_j$, $V_k$... Dans ce cas, pour obtenir un modèle de classification supervisé à plusieurs variables cibles, les variables cibles $V_i$, $V_j$, $V_k$... sont marquées comme telles, et sont également marquées comme Tabou. Les autres variables (non marquées cible) ne sont pas marquées tabou (elles sont donc explicatives).
  Dans le domaine documentaire, les variables cibles peuvent être par exemple le type de document (roman, article thèse...), le thème du document (politiquen informatique, science...).
- Cas 3 : l'utilisateur demande une analyse non supervisée (clustering). Dans ce cas, pour obtenir un modèle de classification non supervisé, toutes les variables sont marquées Cible, et aucune variable n'est marquée comme Tabou.

- Cas 4 : l'utilisateur demande une analyse non supervisée (clustering), mais de plus souhaite que certaines variables $V_i$, $V_j$... (mais pas la totalité des variables) n'interviennent pas comme variable explicative du modèle généré. Dans ce cas, toutes les variables sont notées Cible, et seules les variables spécifiées comme telles sont marquées Tabou.

Dans le domaine documentaire, il n'y a donc pas de classe de document spécifiée (pas une variable cible particulière), les documents vont être classés à partir des valeurs de leurs attributs descriptifs par exemple le compte de mots clés.

Une Interface Homme Machine (par exemple une interface graphique) permet à l'utilisateur de sélectionner un des quatre cas ci-dessus, et de définir les propriétés (cible, tabou, masqué) des variables.

**6.3 Le module CIV (Calculateur d'un Indicateur de Variabilité)**

6.3.1 Notations et principes généraux

Soit E l'ensemble des données. Soit $A_1$... $A_m$ l'ensemble des attributs qui décrivent les données. Soit $d_1$...$d_n$ les données proprement dites. On notera qu'un mode de représentation pratique (sans que ce soit limitatif) de ces données est une tableau à n lignes et à m colonnes (voir la figure 1), où chaque colonne représente un attribut et chaque ligne représente une donnée.

Soit Dom($A_1$)... Dom($A_m$) les ensembles de valeurs prises par les attributs $A_1$...$A_m$. On distingue deux cas : pour un attribut $A_i$ continu, Dom($A_i$) est inclus dans R, ensemble des réels ; pour un attribut $A_i$ discret, alors Dom($A_i$) est l'ensemble des valeurs discrètes (appelées modalités) de cet attribut.

Une partition sur un ensemble de données E est un ensemble P de sous-ensembles $\{P_1,...P_k\}$ tel que tout $P_i$ est inclus dans E, tel que $P_i \cap P_j = \varnothing$ si $i \neq j$, et tel que $U_{i=1 \text{ à } k}\ P_i = E$.

Une bipartition est une partition en deux parties d'un ensemble E : $P=\{P_1,...P_2\}$ et $E=P_1 \cup P_2$.

6.3.2 Inertie d'une partition

L'Inertie d'un nuage de n points X, ayant pour centre de gravité g est :

$$Inertie(X) = \frac{1}{n}\sum_{i=1}^{i=n} d\left(x_i, g\right)^2$$

avec d(.) : fonction de distance entre deux points.

Cette formule est valable pour des données représentables par des points dans un espace, c'est-à-dire des objets ayant des coordonnées, donc des données ayant des attributs continus.

L'Inertie Intra-Classe de n points répartis dans une partition P composées de K sous-ensembles $C_1$...$C_K$ est définie par :

$$Intra(P) = \sum_{j=1}^{K}\left(\sum_{x_i \in C_j} p_i d^2\left(x_i, g_k\right)\right)$$

avec d(.) : fonction de distance entre deux points.

avec $p_i$ : poids du point n°i, la somme des poids $p_i$ valant 1 (le poids de chaque donnée est par défaut uniforme et de valeur 1/N ; notons qu'il ne doit pas être confondu dans cet exposé avec le poids de chaque attribut et attribut recodé).

avec $g_k$ : centre de gravité de l'ensemble des points appartenant au sous-ensemble $C_k$.

6.3.3 Description fonctionnelle du module CIV

Le module 3 « Calculateur d'un Indicateur de Variabilité » (CIV) doit être capable de calculer, pour toute partition $P=\{P_1, P_2,...,P_k\}$ de l'ensemble initial E, ou d'un sous-ensemble F inclus dans E, un critère mathématique sur les attributs $A_i$ ayant les propriétés suivantes :

- le critère est calculable aussi bien pour des attributs continus que pour des attributs discrets :

    * le critère est calculable pour toute suite de valeurs continues $v_1...v_m$, avec $v_i$ appartenant à **R ;**
    * le critère est calculable pour toute suite de valeur discrètes $V_1...V_m$ avec $V_i$ appartenant à $Dom(A_i)$ ;

- le critère est, pour tout attribut continu X, invariant selon toute transformation affine X'=aX+b ;
- le critère est, pour tout attribut discret, invariant selon tout recodage bijectif des modalités ;
- le critère a la même plage de valeurs pour tout attribut, continu ou discret ;
- le critère indique un niveau de variabilité pour chaque attribut. En particulier, il est nul pour toute suite de valeurs identiques, et différent de 0 pour toute suite de valeurs comportant au moins deux valeurs différentes.

L'ensemble des propriétés ainsi définies garantit que le critère est sommable sur l'ensemble des attributs et que cette sommation a un sens, quels que soient les domaines de valeurs $Dom(A_i)$ des différents attributs.

Le module 3 « Calculateur d'un Indicateur de Variabilité » (CIV) calcule le critère ainsi défmi sur l'ensemble des attributs $A_i$, pour la partition P. Il cumule ensuite le critère pour l'ensemble des attributs $A_i$ qui sont marqués comme Cible dans le module 2 « Gestionnaire du Mode d'Utilisation » (GMU).

6.3.4 Description d'un mode de réalisation du module CIV

Le module 3 « Calculateur d'un Indicateur de Variabilité » (CIV) est un module de programme informatique qui permet d'évaluer la qualité d'une partition d'un ensemble de données en K sous-ensembles de données.

L'Inertie Intra-Classe est un indicateur classique d'évaluation de la qualité d'une partition. Un des modes de réalisation possible du module 3 « Calculateur d'un Indicateur de Variabilité » (CIV) est donc de réussir à calculer une Inertie Intra Classe sur des données avec des attributs qui peuvent être aussi bien continus (avec des échelles différentes) que discrets et donc sans notion de centre de gravité, en respectant de plus les cinq propriétés décrites dans la description fonctionnelle ci-dessus.

Dans un mode de réalisation particulier, le module 3 « Calculateur d'un Indicateur de Variabilité » (CIV) est composé des trois algorithmes suivants :

- un algorithme d'initialisation (« CIV_Init ») qui permet d'initialiser des paramètres de recodage ;
- un algorithme de recodage (« CIV_Recode ») qui permet de recoder les données avec des attributs continus et normalisés dans [0..1] ;
- une fonction de calcul d'indicateur (« CIV_Indicateur ») qui renvoie pour toute partition P d'un sous-ensemble de l'ensemble initial des données E un indicateur de qualité de la partition.

On note, pour tout attribut continu $A_j$, $max(A_j)$ et $min(A_j)$ respectivement la valeur maximale et la valeur minimale prise par $A_j$ dans son ensemble de valeur $Dom(A_j)$.

On note, pour tout attribut discret $A_j$, $nbMod(A_j)$ le nombre de modalités différentes de $A_j$, c'est à dire le cardinal de $Dom(A_j)$.

Le poids des attributs d'origine est déterminé par appel au module 2 « Gestionnaire du Mode d'Utilisation » (GMU) qui indique les attributs cibles. Une table « PoidsInitial » stocke les poids (0 ou 1) de chaque attribut d'origine. Une table « PoidsZ » stocke les poids (0 ou 1) des attributs issus du recodage. Une table « Mapping[] », non détaillée, effectue le mappage (mapping en anglais) entre les attributs initiaux et leurs versions recodées.

Le pseudo-code de l'algorithme d'initialisation (« CIV_Init ») est par exemple :

**Algorithme CIV_init(Ensemble de données initial E)**

Début

Pour chaque attribut Aj

    Si $A_j$ est de type continu

        déterminer $max(A_j)$ et $min(A_j)$

    Si $A_j$ est de type discret

déterminer son ensemble de modalité $Dom(A_j)$

    Fin pour

    Si $A_j$ est de type Cible (Appel au module 2 « Gestionnaire du Mode d'Utilisation » (GMU)) alors PoidsInit[j]=1 sinon PoidsInit[j]=0

Fin pour

Fin Algorithme

Le pseudo-code de l'algorithme de recodage (« CIV_Recode ») est par exemple :

**Algorithme Recode (Ensemble de données initial E) : sortie : ensemble E' avec les attributs recodés $Z_1...Z_Q$**

Début

Pour chaque attribut $A_j$

    Si $A_j$ est de type discret

    alors

        recoder $A_j$ selon un codage disjonctif complet en $Z_{d(j)} ...Z_{f(j)}$ avec $NbMod(A_j)=f(j)-d(j)+1$

        Pour chaque nouvel attribut $Z_i$ ( pour i=d(j) à f(j) ) issu du codage disjonctif complet de $A_j$

            PoidsZ[i]=PoidsInitial[j]

        Fin pour

    Si $A_j$ est de type continu

    Alors normaliser $A_j$ dans [0;1] à partir des données $Max(A_j)$ et $Min(A_j)$

Fin Pour

Fin Algorithme

Le codage disjonctif complet d'un attribut discret consiste à créer un nouvel attribut pour chacune de ses modalités et, pour chaque valeur initiale de l'attribut, à coder 0 pour les nouveaux attributs qui ne correspondent pas à cette valeur, et à coder 1 pour l'attribut qui correspond à cette valeur. Le codage disjonctif complet est un domaine connu de l'état de l'art (informaticien-statisticien ou data-miner) et n'est pas précisé davantage.

En sortie du recodage, tous les attributs recodés $Z_1...Z_Q$ sont continus et ont tous [0;1] comme domaine de valeur.

Un mappage général est conservé afin de pouvoir faire correspondre à tout attribut $A_j$ continu son attribut recodé $Z_j$, et à tout attribut $A_j$ discret son ensemble d'attributs recodés $Z_{d(j)}... Z_{f(j)}$. d(j) et f(j) sont respectivement les indices de début et de fm des attributs recodés.

A chaque partition $P=P_1...P_K$ dans l'ensemble de données initial on fait correspondre la même partition des données mais en utilisant le nouvel espace de représentation $Z_1...Z_Q$.

Dans l'espace des attributs recodés $Z_1...Z_Q$, tout sous-ensemble de données peut être représenté par un nuage de point, et donc pour tout sous-ensemble de données on peut défmir un barycentre.

La distance entre deux valeurs $x_j$, $y_j$ de chaque attribut recodés $Z_j$ est ensuite définie par :

- Distance $Z_j(x_j, y_j) = |x_j - y_j|$ si $Z_j$ est issu d'un attribut continu (attribut numérique) ;
- Distance $Z_j(x_j, y_j) = |x_j - y_j|/2$ si $Z_j$ est issu d'un recodage disjonctif complet d'un attribut discret (attribut symbolique).

Notons que dans le cas d'un attribut recodé issu d'un recodage d'un attribut discret, la distance est corrigée par 1/2. Ceci afin d'éviter de donner un poids supérieur aux attributs discrets, qui ont une distance variant de 0 à 2 lorsqu'ils sont recodés en codage disjonctif complet.

La fonction de distance pour les données dans le nouvel espace de représentation des attributs $Z_1 \ldots Z_Q$ est alors définie très classiquement par :

$$d(d_a, d_b) = \sqrt{\sum_{j=1}^{Q} \left( Distance Z_j \left( Z_{ja}, Z_{jb} \right) poids Z(j) \right)^2}$$

où $d_a(Z_{1a}, Z_{2a}, \ldots Z_{Qa})$ et $d_b(Z_{1b}, Z_{2b}, \cdots Z_{Qb})$ sont deux données recodées dans l'espace des attributs recodés $Z_1 \ldots Z_Q$.

Nous pouvons maintenant écrire le pseudo-code de la fonction de calcul d'indicateur (« CIV_Indicateur ») :

**Fonction CIV _indicateur(Entrée : une partition $P_1 \ldots P_K$ de données)**

Début

Recoder la partition dans l'espace des attributs recodés $Z_l \ldots Z_Q$

Calculer l'Inertie Intra-Classe de la partition $P_l \ldots P_K$ dans cet espace recodé $Z_l \ldots Z_Q$

Retourner l'Inertie Intra-Classe

Fin Fonction

### 6.4 Le module GPC (Générateur de Partitions Candidates)

6.4.1 Notations et principes généraux

On définit une condition binaire comme un test simple portant sur un attribut. Une condition peut être testée sur une donnée, et retourne une valeur vrai ou faux.

Une règle binaire est un ensemble de conditions (de une à plusieurs) liées par des conjonctions « ET ». Une règle binaire peut être testée sur une donnée, et retourne une valeur vrai ou faux.

Les notions de partition et bipartition ont déjà été définies plus haut. Une condition binaire portant sur un attribut $A_j$ permet de définir une bipartition d'un ensemble initial de données E en deux sous ensemble $P_1$ et $P_2$. Il suffit pour cela d'affecter au sous-ensemble $P_1$ les données ayant la valeur vrai pour le test binaire en question, et d'affecter au sous-ensemble $P_2$ les données ayant la valeur faux pour le test binaire en question. Ainsi toute règle à une ou plusieurs conditions sur les attributs des données permet de défmir une bipartition sur ces données.

De même, et par extension, un ensemble de K règles binaires permettent de défmir une partition comprenant :

- au minimum 2 sous ensembles, si par exemple on affecte toutes les données ayant au moins une valeur faux pour une des règles au sous-ensemble $P_1$, et toutes les autres données à $P_2$ ;
- au maximum à $2^K$ sous ensembles, si chaque configuration des valeurs des K règles correspond à un sous-ensemble et réciproquement.

6.4.2 Description fonctionnelle du module GPC

Le module 4 « Générateur de Partitions Candidates » (GPC) doit être capable de générer des partitions candidates qui seront évaluées et sélectionnées par le module 5 « Optimiseur Sélectionneur de Partitions » (OSP). Chaque partition candidate est décrite selon une ou plusieurs règles binaires. Chaque règle binaire porte sur un ou plusieurs tests effectués sur des attributs des données. Les attributs utilisables dans les tests ne peuvent être que des attributs non marqués comme Tabou dans le module 2 « Gestionnaire du Mode d'Utilisation » (GMU).

Nous détaillons ici le principe pour des bipartitions. Le principe peut être généralisé pour des partitions à plus de deux sous-ensembles, en utilisant une correspondance entre un ensemble de règles et une partition comme cela est expliqué au paragraphe précédent (dans ce cas on utiliserait un module 4 « Générateur de Partitions Candidates » (GPC) utilisant une exploration stochastique, encapsulé dans un module gérant plusieurs règles à la fois).

Pour créer une bipartition, le module 4 « Générateur de Partitions Candidates » (GPC) sélectionne un à plusieurs attributs parmi les attributs des données (non masqués), à partir du module 2 « Gestionnaire du Mode d'Utilisation » (GMU), en sélectionnant uniquement des attributs non marqués Tabou. Les attributs cibles, s'ils ne sont pas marqués Tabou, peuvent être sélectionnés.

A partir des attributs sélectionnés, le module 4 génère une règle binaire. Cette règle est composée de une à plusieurs conditions. Chaque condition est par exemple du type $A_i < V_{ij}$ dans le cas d'un attribut $A_i$ continu, ou du type $Ai=M_{ij}$ dans le cas d'un attribut discret. Avec $V_{ij}$ une valeur continue comprise dans $Dom(A_i)$ ou $M_{ij}$ une modalité comprise dans $Dom(A_i)$.

Notons que les partitions peuvent être générées selon plusieurs principes :

- exhaustif : toutes les partitions possibles réalisables à partir de règles contenant de 1 à T conditions, chaque condition portant sur l'un des attributs $A_i$ non tabous et sur une valeur parmi celles possibles dans $Dom(A_i)$ sont étudiées.
- stochastique : les partitions possibles sont générées au hasard, ou améliorées par une technique d'optimisation stochastique.

Le mode de génération exhaustif des bipartitions peut être coûteux dans le cas où on analyse de grandes quantités de données. Le mode stochastique est donc préférable et est donc détaillé comme le mode privilégié de réalisation. On utilise par exemple une méta heuristique d'optimisation combinatoire semblable aux algorithmes génétiques, de type "Recherche locale à voisinage variable" (ou VNS, pour "Variable Neighborhood Search" en anglais).

6.4.3 Description d'un mode de réalisation du module GPC

Nous précisons le mode d'exploration stochastique dans le cas d'une génération d'une règle de bipartition. Les conditions sont ici simplifiées à des tests simples. On peut facilement étendre ce langage de base.
Les conditions sont de la forme Attribut < Valeur ou Attribut >= Valeur pour les attributs continus. Les conditions sont de la forme Attribut = Valeur ou Attribut != Valeur pour les attributs discrets (!= correspond à "différent de ").
On désigne de nouveau par $Dom(A_j)$ l'ensemble des valeurs prises par un attribut $A_j$ dans les données.
Le module 4 « Générateur de Partitions Candidates » (GPC) se compose d'un algorithme principal (« GPC ») et de deux sous-fonctions (« VoisinageMedian » et « GénérerUneCondition ») dont les pseudo-codes sont présentés ci-après. Il reçoit en entrée : une règle R (qui peut être nulle, c'est-à-dire non définie, à l'initialisation), un niveau de voisinage VNS (pouvant prendre les valeurs Immédiat, Proche, Médian, Lointain) et la taille maximale d'une règle en nombre de conjonctions de conditions. Il génère en sortie une règle décrivant la prochaine bipartition à tester.
Le pseudo-code de l'algorithme principal (« GPC ») est par exemple :

**Algorithme GPC (Règle R, voisinage VNS,) : renvoie une de règle de bipartition**

Taille max de la règle : TailleMax    // variable statique initialisée par le module

                // principal 6

Début

Si R est nulle, alors VNS=Lointain

Suivant la valeur de VNS

    VNS= Immédiat :

        Sélectionner au hasard une des conditions de R, soit C cette condition

        Soit A l'attribut sur lequel porte la condition C

        Soit V la valeur du test

        Si A est de type continu

            alors V=V+e avec e petite variation aléatoire, positive ou négative

        Si A est de type discret

            alors Remplacer V par une autre valeur tirée au hasard dans Dom(A)

Fin Cas Immédiat

VNS= Proche :

Sélectionner au hasard une des conditions de R, soit C cette condition

Soit A l'attribut sur lequel porte la condition C

Soit V la valeur du test

Remplacer V par une autre valeur tirée au hasard dans Dom(A)

Fin Cas Proche

VNS=Médian :

R=VoisinageMédian(R)

Fin Cas Médian

VNS=Lointain

Pour j de 1 à MaxVoisinage Faire R=voisinageMedian(R, tailleMax)

Fin Cas lointain

// note : MaxVoisinage est soit une constante, empiriquement sa valeur peut être par exemple entre 2 et 10, soit une fonction du nombre d'attributs de l'ensemble de données (un certain pourcentage p du nombre d'attribut M, avec une valeur minimum de 2).

Fin des cas VNS

Renvoyer la règle candidate R.

Fin Algorithme.

Le paramètre e peut être par exemple une fonction décroissante d'un paramètre de température T utilisé par le module 5 « Optimiseur Sélectionneur de Partitions » (OSP).

La fonction VoisinageMedian modifie aléatoirement une règle selon un voisinage médian : elle ajoute ou retire une condition à la règle envoyée en paramètre. Son pseudo-code est par exemple :

**Fonction VoisinageMedian (paramètre : une règle R, taille max) : retourne une règle**

Début

Si R est nulle

alors Modification=Ajout

Sinon Modification = Aléatoire(Ajout, Retrait)

    // note : La fonction Aléatoire renvoie soit ajout, soit retrait au hasard. Cette fonction peut être utilisée avec une distribution uniforme par exemple, ou avec un a priori favorisant l'ajout de condition ou au contraire le retrait de condition.

Si Modification=Ajout

Alors

    Si le nombre de condition de R est inférieur à tailleMax

    alors

        C=GénérerUneCondition()

        Ajouter à la règle R la condition C

    Fin Si

Sinon

    Si le nombre de condition de R est supérieur à 0

    alors

        Sélectionner au hasard une condition C dans la règle R

        Supprimer la condition C dans R

    Fin Si

Fin Si

Retourner R

Fin Fonction.

La fonction GénérerUneCondition crée une condition aléatoirement. Cette condition n'utilise que des attributs valides dans le module 2 « Gestionnaire du Mode d'Utilisation » (GMU), c'est-à-dire que des attributs non marqués Tabous (et non masqués). Son pseudo-code est par exemple :

**Fonction GénérerUneCondition() : retourne une condition**

Début

Sélectionner un attribut A au hasard parmi les attributs non tabous de la table GMU.

Si A est de type continu

Alors Opérateur=Aléatoire(<, =>)    // si l'attribut est continu on choisit au hasard

                                // l'opérateur inférieur ou l'opérateur supérieur ou

                                // égal.

Sinon Opérateur=Aléatoire(=,!=)     // si l'attribut est discret on choisit au hasard

// l'opérateur égal ou l'opérateur différent de.

Sélectionner une valeur V tirée au hasard dans Dom(A).

Construire la condition C : A Opérateur V

Retourner C

Fin Fonction.

6.4.4 Exemples d'autres modes de réalisation du module GPC

Pour une exploration exhaustive de toutes les règles avec un maximum de Cmax conditions, un autre mode de réalisation consiste à identifier chaque règle à l'aide d'un numéro constitué de la concaténation du numéro d'attribut, du numéro d'opérateur et du numéro de valeurs testées.

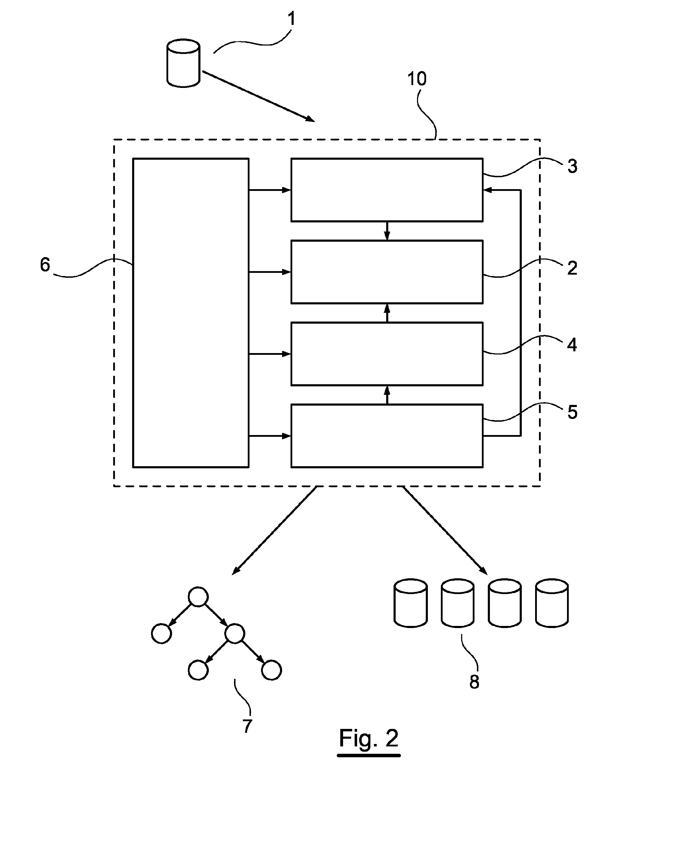

Par exemple, pour une règle à Cmax conditions maximum, avec un ensemble de données ayant J attributs non tabous, et avec I lignes de données, et en utilisant uniquement 2 types d'opérateur par type d'attribut, le nombre total de règles à explorer est de : $(I * J * 2)^{Cmax}$, et chaque règle peut être identifiée par un numéro unique comme le montre l'exemple illustré sur la **figure 4.**

La modification du module 4 « Générateur de Partitions Candidates » (GPC) pour une recherche exhaustive consiste alors à renvoyer, pour toute règle identifiée par son numéro, le numéro d'identification de la règle suivante (le paramètre VNS devient inutile).

On peut également effectuer une exploration exhaustive réduite par intervalles et groupes de valeurs. On reprend alors le principe du mode de réalisation dans le cas d'une exploration exhaustive de l'espace des règles. Mais on modifie la façon de numéroter, et donc d'explorer, les numéros de valeurs des différents attributs.

Dans le cas des numéros de valeurs pour chaque attribut continu (numérique), au lieu de prendre toutes les valeurs réalisées, on n'explore qu'un sous-ensemble des valeurs discrétisées. La discrétisation peut être effectuée selon l'une des méthodes classiques de l'état de l'art en statistique : fréquences égales, ou intervalles de même largeurs.

Pour les attributs discrets, on se restreint à explorer uniquement les valeurs ayant une fréquence supérieure à un seuil donné (par exemple, 5%), et une valeur issue du regroupage des valeurs peu fréquentes.

**6.5 Le module OSP (Optimiseur Sélectionneur de Partition)**

6.5.1 Principe du module OSP

Le module 5 « Optimiseur Sélectionneur de Partitions » (OSP) demande au module 4 « Générateur de Partitions Candidates » (GPC) de générer une première partition candidate. Le module GPC 4 renvoie une règle équivalente à une partition des données. Puis cette partition est envoyée au module 3 « Calculateur d'un Indicateur de Variabilité » (CIV) qui l'évalue. Si cette partition est meilleure que la précédente la nouvelle partition remplace la précédente.

6.5.2 Description d'un mode de réalisation du module OSP

Le pseudo-code de ce module 5 est par exemple :

**Module OSP (paramètre E : ensemble ou sous-ensemble des données) : renvoie une règle correspondant à la meilleure partition trouvée**

Début

R=null          // ou autre règle initiale de démarrage

$I = +\infty$

Répéter

     Envoyer R au module GPC 4 avec un paramètre de voisinage VNS

     Soit R' la règle suivante reçue en retour du module GPC 4

     Soit $P_1$ l'ensemble correspondant aux données de E pour lesquelles R' est vraie

     Soit $P_2$ l'ensemble correspondant aux données de E pour lesquelles R' est fausse

     Envoyer la partition $P=(P_1, P_2)$ au module CIV 3 pour évaluer la partition

     Soit I' la valeur de l'indicateur en retour du module CIV 3

     Si I' est inférieur à I    // cas d'amélioration

     Alors

         mise à jour R=R'

         mise à jour I=I'

         Modifier le voisinage d'exploration VNS en le diminuant (cas a)

     Sinon

         Modifier le voisinage d'exploration VNS en l'augmentant (cas b)

     Fin Si

     Tant que non (exploration terminée)

Retourner R

Fin algorithme.

Voici des exemples de condition d'arrêt pour le test "exploration terminée" : soit après un nombre donné de règles explorées (cas d'un module GPC 4 stochastique), soit après avoir évalué toutes les règles possibles (cas d'un module GPC 4 avec recherche exhaustive des règles).

Dans le cas d'une exploration stochastique par le module GPC 4, le paramètre VNS correspond à une fonction d'une température T. Une température faible correspond à un voisinage proche. Une température élevée correspond à un voisinage lointain. La température est augmentée (progressivement) à chaque fois que la règle R' n'améliore pas la règle courante (cas a). La température est redescendue (à un seuil minimal) à chaque fois que la règle R' améliore la règle courante (cas b).

Dans le cas d'un exploration exhaustive par le module GPC, le paramètre VNS n'est pas utilisé : le module retourne la règle R' qui est le successeur de la règle R dans la numérotation de l'espace des règle.

6.5.3 Description d'un mode de réalisation amélioré du module OSP

Afm de diminuer le risque de surapprentissage de l'arbre de décision, il est intéressant d'évaluer la qualité des partitions non pas seulement sur l'ensemble E des données d'origine mais aussi sur un ensemble de test F.

Un deuxième indicateur $I_F$ est géré en parallèle à I. Ainsi ce mode permettant de prévenir le surapprentissage consiste à évaluer aussi R' sur un ensemble F et à vérifier que sur l'ensemble F aussi un indicateur $I_F$ est amélioré par R' par rapport à R. Ce test n'est effectué que si I est déjà amélioré sur E par R'. Si on détecte une amélioration de l'indicateur I sur l'ensemble E alors qu'il n'y a pas amélioration de $I_F$ sur F alors un compteur de surapprentissage est incrémenté. Au-delà d'un certain seuil pour ce compteur, on arrête la procédure du module OSP. Une règle n'est par ailleurs retenue que si elle améliore I et $I_F$.

**6.6 Le module principal (Main)**

6.6.1 Principe du module principal

Le module principal 6 gère les entrées sorties, l'IHM (Interface Homme-Machine), la coordination globale des autres modules 2 à 5 et la génération de l'arbre de décision par application récursive du module 5 « Optimiseur Sélectionneur de Partitions » (OSP).

6.6.2 Description d'un mode de réalisation du module principal

La gestion de données et d'un dictionnaire des données avec des attributs continus ou discrets (par exemple un tableau de données, référencé 1 sur la figure 2) est identique à ce qui est connu dans l'état de l'art et n'est donc pas expliqué ici.

L'application d'un arbre de décision existant à un ensemble de données existant est identique à ce qui est connu dans l'état de l'art et n'est donc pas expliqué ici (élément de sortie référencé 8 sur la figure 2).

La génération d'un arbre de décision est un domaine bien connu de l'état de l'art et n'est donc pas précisé ici dans tous les détails (élément de sortie référencé 8 sur la figure 2). Notamment, la gestion d'informations dans un arbre binaire et la construction d'un arbre binaire ne sont pas précisées dans les détails. Seuls les principes d'interactions des différents modules sont précisés.

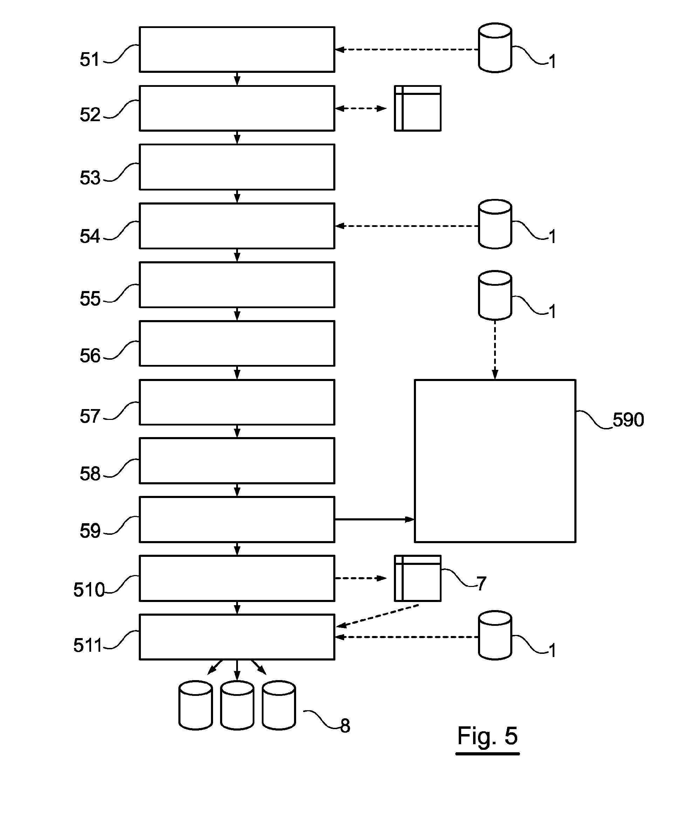

On présente ci-dessous un exemple de pseudo-code du module principal (Main) 6, pour la partie génération de l'arbre de décision. Les références d'étapes de l'organigramme de la **figure 5** sont indiquées entre crochets à différents endroits au sein de ce pseudo-code, afm de montrer le lien entre le pseudo-code du module principal 6 et le procédé selon l'invention de génération d'un arbre de décision et/ou application d'un arbre de décision à des données.

**Module Main() :**

Début

Demander à l'utilisateur le nom de la source de données E [étape 51]

Ouvrir la source de données E [étape 51]

Ouvrir (ou générer) le dictionnaire des données pour avoir le type de chaque attribut $A_i$ [étape 52]

Initialiser le module GMU 2 en demandant à l'utilisateur le type de modélisation qu'il souhaite effectuer, et le rôle qu'il souhaite donner à chaque variable [étape 53]

Initialiser le module CIV 3 en effectuant une passe sur les données E afin de déterminer les domaines de valeurs Dom($A_i$) pour chaque attribut $A_i$ [étape 54]

Demander à l'utilisateur s'il souhaite générer un arbre de décision et/ou appliquer un arbre de décision sur les données [étape 55]

Demander à l'utilisateur les paramètres de croissance de l'arbre de décision qu'il souhaite générer [étape 56] :

    nombre de noeud max : maxNoeud

    profondeur max : maxProfondeur

    nombre maximal de condition par règle : maxCondition

    //etc...

Initialiser le module GPC 4 (paramètre maxCondition) [étape 57]

//Appeler la fonction Arbre [référencée 590 sur la figure 5] avec en paramètre les données E ainsi que les paramètres de croissance de l'arbre

    A = créer une racine. [étape 58]

    A= Arbre(E, paramètres...) [étape 59]

Générer la représentation de l'arbre obtenu [étape 510]

Fin Algorithme.

Le pseudo-code de la fonction Arbre [référencée 590 sur la figure 5] est par exemple le suivant :

**Fonction Arbre (paramètres E : données, A : Arbre, paramètres : maxNoeud, maxProfondeur, maxCondition...)**

Début

Si A n'a pas atteint ses paramètres maximum

Alors

    Trouver la meilleure règle R de partitionnement par appel du module OSP 5

    Soit $P_1$ l'ensemble correspondant aux données de E pour lesquelles R est vraie

    Soit $P_2$ l'ensemble correspondant aux données de E pour lesquelles R est fausse

    Mémoriser R dans A, ainsi que les statistiques relatives aux ensembles $P_1$ et $P_2$

    Si $P_1$ est non vide alors Arbre ($P_1$, FilsGauche(A), paramètres...)

    Si $P_2$ est non vide alors Arbre ($P_2$, FilsDroit(A), paramètres....)

Fin Si

Retourner A

Fin Fonction.

Sur la figure 5, l'étape référencée 511 est l'application d'un arbre de décision 7 (préalablement généré) pour classer un ensemble de données 1, en supposant que c'est ce que l'utilisateur a demandé lors de l'étape référencée 55. Les données classées selon l'arbre de décision sont référencées 8, comme sur la figure 2. Il est à noter qu'on passe trivialement de l'étape référencée 55 à celle référencée 511, si l'utilisateur souhaite juste réutiliser un arbre de décision déjà généré.

La figure 6 présente enfin la structure du dispositif selon l'invention de la figure 2. Il comprend une mémoire M 61, et une unité de traitement 60 équipée d'un microprocesseur µP, qui est piloté par un programme d'ordinateur (ou application) Pg 62 afm de mettre en oeuvre le procédé illustré sur la figure 5 (procédé de génération d'un arbre de décision et/ou application d'un arbre de décision à des données). L'unité de traitement 60 reçoit en entrée un ensemble de données 1, que le microprocesseur µP traite, selon les instructions du programme Pg 62, pour générer un arbre de décision 7 ou des données classées 8 (selon un arbre de décision préalablement généré).

**Revendications**

1. Procédé de génération d'un arbre de classification (7) en fonction d'un modèle de classification et à partir d'un ensemble de données à classer (1) décrites par un ensemble d'attributs, **caractérisé en ce qu'**il comprend une étape d'obtention dudit modèle de classification, comprenant elle-même une étape (53) de définition d'un mode d'utilisation pour chaque attribut consistant à préciser quelle(s) propriété(s) possède ledit attribut parmi les au moins deux propriétés suivantes, non exclusives l'une de l'autre :

   - un attribut est marqué cible s'il est à expliquer ;
   - un attribut est marqué tabou s'il ne doit pas être utilisé comme attribut explicatif, un attribut non marqué tabou étant un attribut explicatif ; et **en ce que** ledit modèle de classification appartient au groupe comprenant :
   - des modèles de classification supervisés à un attribut cible, dans chacun desquels un unique attribut est marqué cible et tabou, les attributs non marqués cible n'étant pas marqués tabou ;
   - des modèles de classification supervisés à plusieurs attributs cibles, dans chacun desquels au moins deux attributs, mais pas tous les attributs, sont marqués cible et tabou, les attributs non marqués cible n'étant pas marqués tabou ; et
   - des modèles de classification non supervisés, dans chacun desquels tous les attributs sont marqués cible, et au moins un attribut n'est pas marqué tabou.

2. Procédé selon la revendication 1, **caractérisé en ce que**, parmi les modèles de classification non supervisés, on distingue :

   - ceux dans chacun desquels tous les attributs sont marqués cible, et aucun attribut n'est marqué tabou ; et
   - ceux dans chacun desquels tous les attributs sont marqués cible, et au moins un attribut, mais pas tous les attributs, est marqué tabou.

3. Procédé selon l'une quelconque des revendications 1 et 2, **caractérisé en ce que** la définition du mode d'utilisation pour chaque attribut tient compte également de la propriété suivante, non exclusive des deux autres propriétés :

   - un attribut est marqué masqué s'il ne doit pas être pris en compte pour définir ledit modèle de classification.

4. Procédé selon l'une quelconque des revendications 1 à 3, ledit arbre de décision comprenant au moins un noeud permettant de définir une partition sur un sous-ensemble de données reçu par ledit noeud, chaque noeud étant un ensemble de règles de partitionnement comprenant au moins une règle définie par au moins une condition sur au moins un des attributs, **caractérisé en ce que**, pour générer l'ensemble de règles de chaque noeud, le procédé comprend les étapes suivantes (59, 590), effectuées de manière itérative tant qu'au moins un critère de fm d'exploration n'est pas vérifié :

   a) obtention d'un nouvel ensemble de règles permettant de définir une nouvelle partition sur le sous-ensemble de données reçu par le noeud, la ou les conditions qui définissent chaque règle portant uniquement sur un ou plusieurs attributs non marqués tabou ;

b) première évaluation de la qualité de la nouvelle partition, par obtention d'une nouvelle valeur d'un premier indicateur calculé avec l'ensemble de données, seuls les attributs marqués cible influant sur ledit premier indicateur ;

c) si la qualité de la nouvelle partition, évaluée avec le premier critère, est supérieure à celle des partitions évaluées lors des itérations précédentes, également avec le premier critère, la nouvelle valeur du premier indicateur est stockée et devient une valeur optimale courante, et le nouvel ensemble de règles est stocké et devient un ensemble de règles optimal courant,

de sorte qu'au final, l'ensemble de règles dudit noeud est l'ensemble de règles optimal courant au moment où un critère de fin d'exploration est vérifié.

5. Procédé selon la revendication 4, **caractérisé en ce que** l'obtention d'une nouvelle valeur de l'indicateur, pour une nouvelle partition, comprend les étapes suivantes :

- on affecte un poids égal à un à chacun des attributs d'origine marqués cible, et un poids égal à zéro à chacun des attributs d'origine non marqués cible ;
- on recode l'ensemble des attributs d'origine en un ensemble d'attributs recodés $Z_1...Z_Q$ tel que:

   * si ledit d'origine $A_j$ est de type discret et possède N modalités différentes, il est recodé, selon un recodage disjonctif complet, en N attributs recodés $Z_{d(j)}...Z_{f(j)}$ ayant [0 ;1] comme domaine de valeur, avec N = f(j)-d(j)+1, chacun des N attributs recodés se voyant attribuer un poids identique à celui de l'attribut d'origine dont ils sont issus ;
   * si ledit d'origine $A_j$ est de type continu, il est recodé en un attribut recodé en normalisant à [0 ;1] son domaine de valeur, ledit attribut recodé se voyant attribuer un poids identique à celui de l'attribut d'origine dont il est issu ;

- on recode la nouvelle partition dans l'espace des attributs recodés ;
- on calcule l'inertie Intra-Classe de la nouvelle partition recodée dans l'espace des attributs recodés.

6. Procédé selon la revendication 5, **caractérisé en ce que** l'inertie Intra-Classe est défmie par :

$$Intra(P) = \sum_{j=1}^{K}\left(\sum_{x_i \in C_j} p_i d^2(x_i, g_k)\right)$$

où P est une partition de n points, composée de K sous-ensembles $C_1 ... C_K$,
d(.) est une fonction de distance entre deux points,
$p_i$ est le poids du point numéro i, la somme des poids $p_i$ valant un, et
$g_k$ est le centre de gravité de l'ensemble des points appartenant au sous-ensemble $C_k$,
et **en ce que** la fonction de distance d(.), pour les données recodées dans l'espace des attributs recodés $Z_1 ... Z_Q$ est définie par :

$$d(d_a, d_b) = \sqrt{\sum_{j=1}^{Q}\left(DistanceZ_j(Z_{ja}, Z_{jb})poidsZ(j)\right)^2}$$

où $d_a(Z_{1a}, Z_{2a},... Z_{Qa})$ et $d_b(Z_{1b}, Z_{2b},... Z_{Qb})$ sont deux données recodées dans l'espace des attributs recodés $Z_1 ... Z_Q$, et :

DistanceZ$_j$(X$_j$,Y$_j$) = |X$_j$-Y$_j$| si $Z_j$ est un attribut recodé issu d'un attribut de type continu,
Distance Z$_j$ (x$_j$,y$_j$) = |x$_j$-y$_j$|/2 si $Z_j$ est un attribut recodé issu d'un recodage disjonctif complet d'un attribut discret.

7. Procédé selon l'une quelconque des revendications 4 à 6, **caractérisé en ce que** l'étape d'obtention d'un nouvel ensemble de règles, permettant de définir une nouvelle partition, est effectuée selon un mode de génération stochastique des partitions.

**8.** Procédé selon la revendication 7, **caractérisé en ce que** le mode de génération stochastique des partitions est basé sur une méta heuristique d'optimisation combinatoire de type "Recherche locale à voisinage variable".

**9.** Procédé selon l'une quelconque des revendications 4 à 8, **caractérisé en ce que** l'étape c) est remplacée par l'étape suivante :

c') si la qualité de la nouvelle partition, évaluée avec le premier critère, est supérieure à celle des partitions évaluées lors des itérations précédentes, avec le premier critère :

* on effectue une seconde évaluation de la qualité de la nouvelle partition, par obtention d'une nouvelle valeur d'un second indicateur, de même nature que le premier indicateur mais calculé avec un sous-ensemble de données test ;
* si la qualité de la nouvelle partition, évaluée avec le second critère, est supérieure à celle des partitions évaluées lors des itérations précédentes, avec le second critère, les nouvelles valeurs des premier et second indicateurs sont stockées et deviennent des valeurs optimales courantes, et le nouvel ensemble de règles est stocké et devient un ensemble de règles optimal courant,
* si la qualité de la nouvelle partition, évaluée avec le second critère, est inférieure ou égale à celle des partitions évaluées lors des itérations précédentes, avec le second critère, un compteur est incrémenté et : si le compteur a atteint un seuil déterminé, un critère de fin d'exploration est considéré vérifié, sinon les nouvelles valeurs des premier et second indicateurs sont stockées et deviennent des valeurs optimales courantes, et le nouvel ensemble de règles est stocké et devient un ensemble de règles optimal courant.

**10.** Produit programme d'ordinateur, **caractérisé en ce qu'**il comprend des instructions de code de programme pour l'exécution des étapes du procédé selon l'une quelconque des revendications 1 à 9, lorsque ledit programme est exécuté sur un ordinateur.

**11.** Moyen de stockage, éventuellement totalement ou partiellement amovible, lisible par un ordinateur, stockant un jeu d'instructions exécutables par ledit ordinateur pour mettre en oeuvre le procédé selon l'une quelconque des revendications 1 à 9.

**12.** Dispositif de génération d'un arbre de classification en fonction d'un modèle de classification et à partir d'un ensemble de données à classer décrites par un ensemble d'attributs, **caractérisé en ce qu'**il comprend des moyens d'obtention dudit modèle de classification, comprenant eux-mêmes des moyens de définition d'un mode d'utilisation pour chaque attribut, permettant de préciser quelle(s) propriété(s) possède ledit attribut parmi les au moins deux propriétés suivantes, non exclusives l'une de l'autre :

- un attribut est marqué cible s'il est à expliquer ;
- un attribut est marqué tabou s'il ne doit pas être utilisé comme attribut explicatif, un attribut non marqué tabou étant un attribut explicatif ; et **en ce que** ledit modèle de classification appartient au groupe comprenant :
- des modèles de classification supervisés à un attribut cible, dans chacun desquels un unique attribut est marqué cible et tabou, les attributs non marqués cible n'étant pas marqués tabou ;
- des modèles de classification supervisés à plusieurs attributs cibles, dans chacun desquels au moins deux attributs, mais pas tous les attributs, sont marqués cible et tabou, les attributs non marqués cible n'étant pas marqués tabou ; et
- des modèles de classification non supervisés, dans chacun desquels tous les attributs sont marqués cible, et au moins un attribut n'est pas marqué tabou.

| | Attribut 1 | Attribut 2 | (...) | (...) | Attribut P |
|---|---|---|---|---|---|
| donnée 1 | | | | | |
| donnée 2 | | | | | |
| (...) | | | | | |
| (...) | | | | | |
| (...) | | | | | |
| donnée N | | | | | |

Fig. 1

| | Attribut 1 | | (...) | | Attribut P |
|---|---|---|---|---|---|
| Attribut **Masqué** oui/non | | | | | |
| Attribut **Cible** oui/non | | | | | |
| Attribut **Tabou** oui/non | | | | | |

Fig. 3

| Condition 1 | | | Condition i | | | Condition Cmax | | |
|---|---|---|---|---|---|---|---|---|
| N° Attribut | N° Opérateur | N° Valeur | N° Attribut | N° Opérateur | N° Valeur | N° Attribut | N° Opérateur | N° Valeur |
| 2 | 1 | 10 | 10 | 2 | 17 | 7 | 1 | 60 |

Fig. 4

Fig. 6

Fig. 2

Fig. 5

**Office européen des brevets**

## RAPPORT DE RECHERCHE EUROPEENNE

Numéro de la demande

EP 06 10 1548

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 851 353 A (FRANCE TELECOM) 20 août 2004 (2004-08-20) * abrégé * * page 8, ligne 24 - page 9, ligne 7 * | 1-12 | INV. G06K9/62 G06F17/30 |
| A | CHAVENT M: "A monothetic clustering method" PATTERN RECOGNITION LETTERS, NORTH-HOLLAND PUBL. AMSTERDAM, NL, vol. 19, no. 11, septembre 1998 (1998-09), pages 989-996, XP004142887 ISSN: 0167-8655 * Sections 1-4 * | 1-12 | |
| A | FRIGUI H ET AL: "Unsupervised learning of prototypes and attribute weights" PATTERN RECOGNITION, ELSEVIER, KIDLINGTON, GB, vol. 37, no. 3, mars 2004 (2004-03), pages 567-581, XP004479005 ISSN: 0031-3203 * pages 567/568, "Introduction" * | 1-12 | |
| A | BROWN D E ET AL: "Classification trees with optimal multivariate decision nodes" PATTERN RECOGNITION LETTERS, NORTH-HOLLAND PUBL. AMSTERDAM, NL, vol. 17, no. 7, 10 juin 1996 (1996-06-10), pages 699-703, XP004007553 ISSN: 0167-8655 * abrégé * * figures 1,2 * | 1-12 | DOMAINES TECHNIQUES RECHERCHES (IPC) G06K G06F |

Le présent rapport a été établi pour toutes les revendications

| Lieu de la recherche | Date d'achèvement de la recherche | Examinateur |
|---|---|---|
| Munich | 24 mai 2006 | Kessler, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.............................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 06 10 1548

La présente annexe indique les membres de la  famille de brevets relatifs aux documents  brevets cités dans le rapport de recherche européenne visé ci-dessus.
Lesdits members sont contenus au fichier informatique de l'Office  européen des brevets à la date du
Les renseignements fournis sont donnés à titre  indicatif et n'engagent pas la responsabilité  de l'Office européen des brevets.

24-05-2006

| Document brevet cité au rapport de recherche | | Date de publication | Membre(s) de la famille de brevet(s) | | Date de publication |
|---|---|---|---|---|---|
| FR 2851353 | A | 20-08-2004 | GB | 2398410 A | 18-08-2004 |
| | | | US | 2004193573 A1 | 30-09-2004 |

EPO FORM P0460

Pour tout renseignement concernant cette annexe :  voir Journal Officiel de l'Office européen des  brevets, No.12/82